# EUROPEAN PATENT APPLICATION

(11) **EP 3 503 491 A1**
(43) Date of publication of application: **26.06.2019**
(21) Application number: 17209470.8
(22) Date of filing: 21.12.2017
(51) Int. Cl.: H04L 29/06, H04L 9/06

(54) **COMPUTER-IMPLEMENTED METHOD, DATA COMMUNICATIONS SYSTEM AND COMPUTER PROGRAM**

(71) Applicant: Vestel Elektronik Sanayi ve Ticaret A.S., 45030 Manisa (TR)
(72) Inventor: PAMÍR, Meksel Ugur, 45030 Manisa (TR)
(74) Representative: Thomas, Michael Andrew

(57) **Abstract**

There is provided a computer-implemented method for encrypting an input (10) to an electronic system to generate a corresponding output (50). The input (10) comprises a plurality of input data elements and the output (50) comprises a respective plurality of output data elements. The method comprises:
(i) generating, by applying (75) a predetermined irreversible method (25) to a predetermined data element (30), a key having a plurality of key data elements; and
(ii) applying (115) a predetermined reversible complicating method (40) to each of the plurality of input data elements (10) using a respective one of the plurality of key data elements or a respective combination of two or more of the plurality of key data elements, thereby to generate a respective output data element (50).

There is also provided a communications system (5, 15, 20) in which the computer-implemented method is used to encrypt data (10) for transmission over a network (15), and a computer program for implementing the method.

## Description

### Technical Field

The present disclosure relates to a computer-implemented method, to a data communications system and to a computer program.

### Background

There are various techniques available for securing data intended for communication from a transmitting party to a receiving party. In one example, data generated by the transmitting party are firstly encrypted for secure communication to the receiving party using a predetermined encryption algorithm. The receiving party operates a corresponding decryption algorithm. The encryption and decryption of data are each carried out using one or more unique keys. For example, in a symmetric encryption/decryption system, each party holds a unique key with which data may be both encrypted and decrypted according to whether the party is transmitting and encrypting or receiving and decrypting data. For security, each party relies upon retaining secure control over use of the shared key.

In an alternative symmetric technique, of use for example in verifying the identity of a sender, data such as a password identifying the sender are not sent to a receiving party in any form. Instead, the transmitting party may apply an irreversible complication such as a hashing function to the password and only the result of the complication or hashing function is transmitted to the receiving party. However, such a technique relies upon the receiving party having a pre-agreed copy of the password and of the same hashing function. In that way, the receiving party may use the hashing function to generate a hashing result for the pre-agreed password and use that result to verify that the hashing result transmitted by the sender was in fact derived from the same password, so verifying the identity of the sender. As such, this technique is generally limited to identity verification or other form of handshaking protocol in which only a small quantity of pre-agree data are involved and the pre-agreed data are never transmitted. However, in common with secure encryption techniques, such a technique does require significant data processing resources in order to avoid unacceptable latency in a communications session.

### Summary

According to a first aspect disclosed herein, there is provided a computer-implemented method for encrypting an input to an electronic system to generate a corresponding output, the input comprising a plurality of input data elements and the output comprising a respective plurality of output data elements, the method comprising:
(i) generating, by applying a predetermined irreversible method to a predetermined data element, a key having a plurality of key data elements; and
(ii) applying a predetermined reversible complicating method to each of the plurality of input data elements using a respective one of the plurality of key data elements or a respective combination of two or more of the plurality of key data elements, thereby to generate a respective output data element.

As compared with other forms of encryption, the application of a reversible complication to input data may be expected to consume a reduced level of data processing resource. For example, the reversible complicating method may comprise the application of only arithmetic operations to combine a byte of input data with one or more elements of the generated key.

In an example of the method, at (i), the irreversible method comprises a hashing method to generate a key having a predetermined plurality of key data elements. This method may for example be applied once at the beginning of a session to generate a new key for the session.

In an example, the method comprises:
(iii) applying a predetermined irreversible complicating method to generate a new key comprising a corresponding plurality of complicated key data elements, complicated using one or more of the plurality of key data elements, and using the new key at (ii).

The use of an irreversible complicating method, in particular one using only arithmetic and logic operations to complicate an existing key to generate a new key at different times during a session rather than using a hashing algorithm as may be used to generate the initial key at (i), is expected to be particularly efficient in its use of data processing resources.

In an example, (iii) comprises generating a new key when the number of said input data elements complicated at (ii) is equal to the number of said key data elements in the key and (ii) comprises complicating subsequently received input data elements using the new key.

Generating a new key after each of the different key data elements have been used once provides for additional security in the encryption of an input dataset.

In an example, (i) comprises, after generating the key:
generating a random number;
complicating the generated random number using one or more of the plurality of key data elements;
combining the generated random number with the generated key; and
including the complicated random number as an output data element.

The generation of a random number to add an additional complication to the initially generated key adds a further level of security to the encryption process. In particular, knowledge of the random number is required to reverse the complication applied to the output data elements.

In an example, the method comprises:
(iv) decrypting the plurality of output data elements generated at (ii), by:
   (a) generating a key having a plurality of key data elements by applying a predetermined irreversible method, the same as that used at (i), to a predetermined data element, the same as that used at (i);
   (b) for each of the plurality of output data elements, using the key generated at (a) to reverse the respective reversible complication applied at (ii) thereby to recover a respective input data element of the plurality of input data elements; and
   (c) outputting the recovered plurality of input data elements.

The decryption steps may be performed by a different component of the electronic system, operating independently, so ensuring a level of security in the communication of received input data between those components.

According to a second aspect disclosed herein, there is provided a data communications system, comprising a transmitting party and a receiving party each having a respective data processing arrangement linked to a network, wherein the data processing arrangement of the transmitting party is configured:
(i) to generate, by applying a predetermined irreversible method to a predetermined data element, a key having a plurality of key data elements;
(ii) to receive a plurality of input data elements;
(iii) to apply a predetermined reversible complicating method to each of the plurality of input data elements using a respective one of the plurality of key data elements or a respective combination of two or more of the plurality of key data elements, thereby to generate a respective output data element; and
(iv) to transmit the generated plurality of output data elements over the network to the receiving party, and
the data processing arrangement of the receiving party is configured:
(a) to generate a key having a plurality of key data elements by applying a predetermined irreversible method, the same as that used at (i), to a predetermined data element, the same as that used at (i);
(b) to receive a plurality of output data elements from the network;
(c) for each of the plurality of output data elements received over the network, to use the key generated at (a) to reverse the respective reversible complication applied at (iii) thereby to recover a respective input data element of the plurality of input data elements; and
(d) to output the recovered plurality of input data elements.

In an example of the data communications system:
the data processing arrangement of the transmitting party is configured, at (iii), after applying the reversible complicating method to each of a predetermined number of the plurality of input data elements, to apply a predetermined irreversible complicating method to key data elements of the key to generate a new key, and to use the new key when applying the reversible complicating method to subsequently received input data elements; and
the data processing arrangement of the receiving party is configured, at (c), after recovering the predetermined number of the plurality of input data elements at (iii) from said output data elements received over the network, to apply a predetermined irreversible complicating method, the same as used at (iii), to key data elements of the key to generate a new key, and to use the new key when recovering said input data elements from said output data elements received subsequently.

Advantageous additional security is provided by regular refreshes of the key where the input data comprises more input data elements than the number of key data elements in the key. As each of the input data elements is complicated individually, for example using only arithmetic operations to combine respectively selected elements of the key with the input data element, it is beneficial to avoid repeated use of the same key data element to complicate two different input data elements.

In an example, the predetermined number of the plurality of input data elements at (iii) and (c) is equal to the number of said key data elements in the key. The input data elements may therefore be complicated in blocks of input data elements of the same number of input data elements as there are key data elements in the key. A different key may therefore be generated for use in complicating each successive block of input data elements.

In an example, of the data communications system:
the data processing arrangement of the transmitting party is configured, at (i), after generating the key:
   to generate a random number;
   to complicate the generated random number using one or more of the plurality of key data elements;
   to combine the generated random number with the generated key; and
   to include the complicated random number as an output data element, and
the data processing arrangement of the receiving party is configured, at (a), after generating the key:
   to receive an output data element over the network including the random number generated at (i);
   to reverse the complication of the generated random number applied at (i) using the same one or more of the plurality of key data elements generated at (a) as used at (i); and
   to combine the generated random number with the key generated at (a).

According to a third aspect disclosed herein, there is provided a computer program which when installed and executed by a data processing arrangement in an electronic system, causes the data processing arrangement to implement the computer-implemented method as described above according to the first aspect disclosed herein.

According to a fourth aspect disclosed herein, there is provided a computer program, comprising a first component which when installed and executed by a data processing arrangement of a transmitting party in a communications system, causes the data processing arrangement of the transmitting party:
(i) to generate, by applying a predetermined irreversible method to a predetermined data element, a key having a plurality of key data elements;
(ii) to receive a plurality of input data elements;
(iii) to apply a predetermined reversible complicating method to each of the plurality of input data elements using a respective one of the plurality of key data elements or a respective combination of two or more of the plurality of key data elements, thereby to generate a respective output data element; and
(iv) to transmit the generated plurality of output data elements over the network to the receiving party, and
a second component which when installed and executed by a data processing arrangement of a receiving party in the communications system, causes the data processing arrangement of the receiving party:
(a) to generate a key having a plurality of key data elements by applying a predetermined irreversible method, the same as that used at (i), to a predetermined data element, the same as that used at (i);
(b) to receive a plurality of output data elements from the network;
(c) for each of the plurality of output data elements received from the network, to use the key generated at (a) to reverse the respective reversible complication applied at (iii) thereby to recover a respective input data element of the plurality of input data elements; and
(d) to output the recovered plurality of input data elements.

In an example of the computer program according to this fourth aspect, the first component causes the data processing arrangement of the transmitting party:
at (iii), after applying the reversible complicating method to each of a predetermined number of the plurality of input data elements, to apply a predetermined irreversible complicating method to key data elements of the key to generate a new key, and to use the new key when applying the reversible complicating method to subsequently received input data elements, and
the second component causes the data processing arrangement of the receiving party:
   at (c), after recovering the predetermined number of the plurality of input data elements at (iii) from said output data elements received over the network, to apply a predetermined irreversible complicating method, the same as used at (iii), to key data elements of the key to generate a new key, and to use the new key when recovering said input data elements from said output data elements received subsequently.

In an example of the computer program according to this fourth aspect, the predetermined number of the plurality of input data elements at (iii) and (c) is equal to the number of said key data elements in the key.

In an example of the computer program according to this fourth aspect, the first component causes the data processing arrangement of the transmitting party, at (i), after generating the key:
to generate a random number;
to complicate the generated random number using one or more of the plurality of key data elements;
to combine the generated random number with the generated key; and
to include the complicated random number as an output data element, and the second component causes the data processing arrangement of the receiving party, at (a), after generating the key:
to receive an output data element over the network including the random number generated at (i);
to reverse the complication of the generated random number applied at (i) using the same one or more of the plurality of key data elements generated at (a) as used at (i); and
to combine the generated random number with the key generated at (a).

### Brief Description of the Drawings

To assist understanding of the present disclosure and to show how embodiments may be put into effect, reference is made by way of example to the accompanying drawings in which:
Figure 1 shows schematically an example data communications system as disclosed herein; and
Figure 2 shows, in two flow diagrams, an example data communications process as may be operated by a transmitting party and by a receiving party, respectively, in an example communications system as disclosed herein.

### Detailed Description

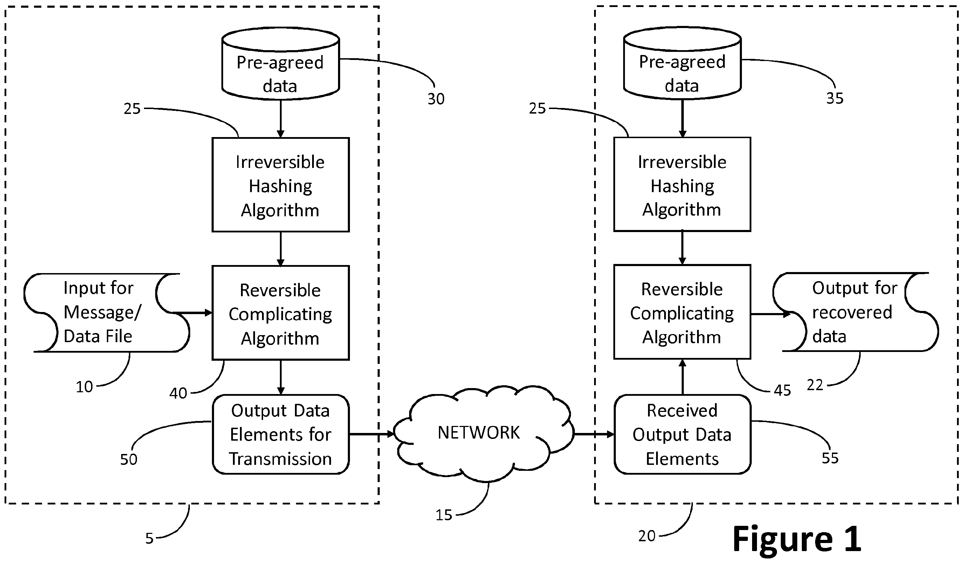

An example of a data communications arrangement according to the present disclosure will now be described with reference to Figure 1. The communications arrangement to be described combines the benefits of a symmetric key encryption, for security of communicated data when in transit, with the benefits of hashing and irreversible complication for disguising information potentially indicative of a source or identity. The examples to be described also have the benefit over conventional symmetric key encryption and conventional uses of hashing techniques in that they do not require high levels of data processing resource to operate effectively.

Referring to Figure 1, an end-to-end communications arrangement is shown in which a transmitting party 5 is intending to transmit received input data 10, for example a message or a data file, over a network 15 to a receiving party 20 where the originally received input message or data file 10 may be recovered and output 22. Each of the transmitting party 5 and the receiving party 20 is provided with their own data processing resources configured to implement some common data processing functionality. In particular, the data processing resources of each party 5, 20 may be configured to execute an irreversible algorithm 25, for example a hashing algorithm, one or more times for each communications session, to generate a key based upon some pre-agreed data stored in a respective data store 30, 35 of the party 5, 20.

An example of an irreversible hashing algorithm 25 requiring a relatively low level of data processing resource is a hashing algorithm as described in a European patent application no. EP 17177625.5 by the present applicant. The hashing algorithm described in that application is arranged, for a given input, to output a 256 bit (32 byte) data string.

For the purposes of the present patent application, the term "irreversible" is intended to mean that an input to an algorithm cannot be obtained by any method given only an output of the algorithm.

The data processing resources of each party 5, 20 are also configured to implement at least a complicating portion 40 and a data recovery portion 45, respectively, of a reversible complicating algorithm 40, 45 to complicate and then recover, respectively, received input data 10 to be communicated between the parties 5, 20. Each of the complicating 40 and data recovery 45 portions of the algorithm 40, 45 is arranged to use a key generated for the communications session as an output of the irreversible hashing algorithm 25 when executed by respective data processing resources based upon a common pre-agreed data portion.

The complicating part 40 of the algorithm 40, 45, implemented by the transmitting party 5, is arranged to use the locally-generated key to complicate the received message or data file 10 to result in an array of output data elements 50 for transmission to the receiving party 20 over the network 15. The data recovery portion 45 of the algorithm 40, 45, implemented by the receiving party 20, uses a key generated when the receiving party 20 executes the same hashing algorithm 25, based upon the same pre-agreed data portion, to recover the original input message or data file 10 from received output data 55.

In an example, the reversible complicating algorithm 40 complicates each byte of the input data 10 using only arithmetical operations to combine the received input data byte 10 with a respective byte or combination of bytes of the generated key. In this way, the data processing resources required at the transmitting party 5 and the receiving party 20 are reduced in comparison with those required for executing other forms of encryption algorithm.

For additional security, the reversible complicating algorithm 40, 45 may be arranged, for example, to execute an irreversible complicating algorithm to generate a new key from a current key where a message or data file comprises more bytes of data than are provided in a key generated for the session by the irreversible hashing algorithm 25. That is, the reversible algorithm 40, 45 may trigger generation of a new key after every n-th byte of the received message or data file 10 has been complicated or recovered, respectively, where *n* is equal to the number of bytes in the key. This process will be described in more detail below.

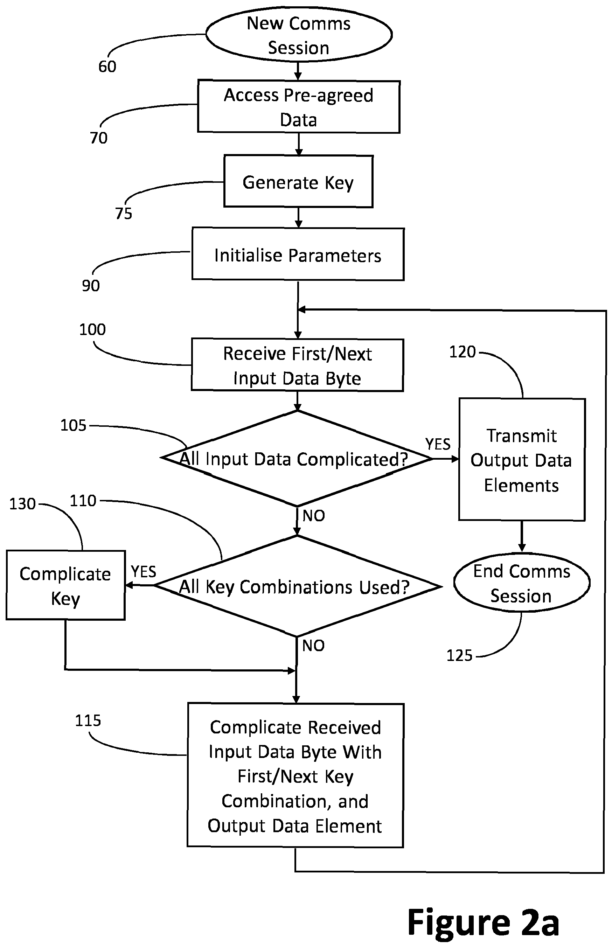

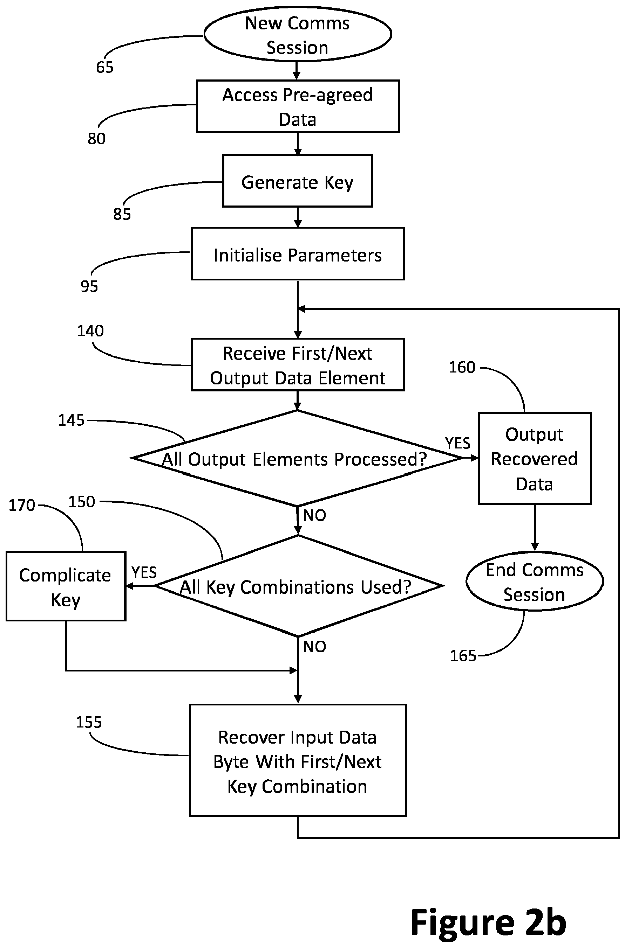

An example of a data communication process as may be implemented by the components 25, 30, 35, 40, 45 of the transmitting party 5 and the receiving part 20 in the arrangement shown in Figure 1, will now be described in more detail with reference to Figure 2. Figure 2a shows the process executed by data processing resources of the transmitting party 5 and Figure 2b shows the process executed by data processing resources of the receiving part 20.

Referring to Figure 2a and to Figure 2b, a new communications session is initiated by the transmitting party at 60 in conjunction with the receiving party 20 at 65, for example by exchanging an initialisation message, according to a communications protocol being used. The transmitting party 5 executes the irreversible hashing algorithm 25 which at 70 accesses the store 30 and retrieves the pre-agreed data. The pre-agreed data may comprise a password or other pre-agreed data portion. Alternatively, a separate secure communications session may be established between the transmitting party 5 and the receiving party 20 to exchange and to agree the pre-agreed data to be used in the communications session.

The irreversible hashing algorithm 25 executed by the transmitting party 5 uses the pre-agreed data 25 at 75 to generate a new key to be used in complicating the message or data file 10. If the irreversible complicating algorithm referenced above is used to generate the key, then the generated key may comprise 256 bits or 32 bytes of key data.

Similarly, the receiving party 20 executes the irreversible hashing algorithm 25 which, at 80, accesses the store 35 and retrieves the pre-agreed data. The irreversible hashing algorithm 25 executed by the receiving party 20 uses the pre-agreed data 35 at 85 to generate a new key to be used in recovering a received message or data file 10 from output data 55 received over the network 15. The key generated by the receiving part 20 at 85 should be identical with the key generated by the transmitting party 5 at 75.

Having generated a key for the communications session, each party, at 90 and 95 respectively, initialises the parameters to be used in the session and the reversible process of complicating the received input data 10 and recovering the received input data 10 may begin.

Referring in particular to Figure 2a, the example complicating algorithm 40 is configured to complicate each byte of the received input message or data file 10 individually to generate a corresponding output data element 50 to be transmitted. Therefore, at 100, on a first pass through the process, the first byte of the input data 10 is received. At 105, not all bytes of the input data 10 have yet been received and complicated and, at 110, not all bytes of the key have yet been used. Therefore, at 115, the first byte of the received input data 10 is complicated using a first selected byte or combination of bytes from the generated key and a first output data element 50 is generated. Processing then returns to 100 where the next input data byte 10 is received.

If, at 105, all the received input data bytes 10 have been complicated and output as elements in the array of output data elements 50, then at 120 the output data elements 50 are transmitted over the network 15. At 125 the session ends for the transmitting party 5, for example after receiving an acknowledgement message from the receiving party 20 of successful receipt of the transmitted output.

If, at 105, not all of the input data bytes 10 have yet been received and complicated but, at 110, all available key data bytes or key data byte combinations have been used then, at 130, the currently used key is input to an irreversible complicating algorithm, an example of which will be described below, to complicate the current key and so generate a new key. At 115, the new key is used, beginning with a first available key data byte or combination of key data bytes, to complicate the received input data byte 10 and so generate the next output data element 50. The process then continues at 100 until all input data bytes 10 have been received and complicated.

In the example irreversible hashing algorithm 25 referenced above, the key generated at 75 comprises 32 bytes. In one example of the reversible complicating algorithm 40, each received input data byte 10 may be complicated using arithmetical operations involving a different byte of the generated key, allowing in this example for 32 bytes of received input data 10 to be complicated differently. Alternatively, a different combination of two bytes may be selected from the key for use in complicating each received byte of the input data 10. The pair of bytes may combine one predetermined byte of the key with a different one of the 32 bytes of the key for each of 32 received bytes of the input data 10.

Alternatively, the pair of bytes selected from the key may comprise a unique combination of bytes of the key, allowing for up to 496 received bytes of the input data 10 to be complicated differently with a 32 byte key. In a further alternative, unique combinations of three or more bytes of the key may be selected to allow for larger numbers of received input data bytes 10 to be complicated differently. However, when all of the available unique combinations of bytes selected from the key have been used, that is, if the number of input data bytes 10 received exceeds the number of different available key data bytes or combinations or key data bytes, then a new key may be generated. However, for additional security, given that arithmetical operations are being used to complicate each received byte of the input data 10, a different key may optionally be generated after every 32 bytes of input data 10 have been received and complicated.

As a further optional extension to the security of the key generated by the irreversible hashing algorithm 25, a random number may be generated at 90 when initialising parameters to be used to complicate the generated key. The generated random number may be disguised at this stage with a reversible complication combining the generated random number with one or more predetermined data bytes of the generated key. In this way, the random number may be communicated to the receiving party 20 with some level of security, for example as the first of the output data elements 50. The generated random number may then be combined with the key generated at 75 to add a further complication to the key. Such a complication would also then need to be added by the receiving party 20 to a key generated at 85, having recovered the random number from the first received output data element 55 by reversing the complication added by the transmitting party 5.

As mentioned above in the example of generating a 32 byte key, a new 32 byte key may be generated at 130 using an irreversible complication after each block of 32 bytes of the input data 10 have been received and complicated. However, the irreversible complication of the key at 130 may optionally be applied to a newly generated key at 75. Such a complication provides an additional level of security when applied to the initially generated key, which key may then be used to begin the process 100-130 of complicating the received input 10. If this option is implemented by the transmitting party 5, then it is also implemented by the receiving party to complicate a new key generated at 85.

The irreversible complication applied at 130 may comprise a process of replacing each of the plurality of key data elements of a current key with a combination of the key data element and a quantity derived from a different respective key data element. The derived quantity may for example be generated by an irreversible operation comprising a logical shift right of the data bits of the different respective key data element summed with a predetermined number greater than zero. The amount of the shift may itself be determined by a logical conjunction of another key data element with a predetermined bit mask. Such an irreversible complication consumes a relatively small data processing resource as compared with re-applying the hashing algorithm 25 to generate a new key. However, the application of the hashing algorithm 25 in place of the irreversible complication algorithm described above remains an option at 130 if the hashing algorithm 25 is of a type known to consume relatively low levels of data processing resource.

The process described above has made an assumption that the received input data 10 are to be processed one byte at a time. However, the received input data 10 may comprise a plurality of input data elements each comprising more than one byte (8 bits) of data. Similarly, the output data elements 50 are not assumed each to comprise values expressible using a single byte. In practice, the size of each output data element 50 depends upon the result of applying the reversible complication at 115.

Referring in particular to Figure 2b, an equivalent process to that implemented by the transmitting party 5 is implemented by data processing resources of the receiving party 20 to recover the original received input data 10 from output data elements 55 received over the network 15. In particular, having generated a key at 85, a process of recovering the original received input data 10 begins at 140 with receipt initially of the first transmitted output data element 55. If the transmitting party 5 has implemented the optional additional complication of the key with a random number then the first received output data element 55 will comprise the complicated random number which must firstly be recovered and used to apply the same complication to the key initially generated at 85.

At 140, on a first pass through the process, the first output data element 55 containing received input data 10 is received. At 145, not all the output data elements 55 have yet been processed and, at 150, not all bytes of the key have yet been used. Therefore, at 155, the first received output data element 55 is processed to reverse the complication applied to a received input data byte 10 by the transmitting party 5 at 100-130 and the first received input data byte 10 is recovered. Processing then returns to 140 where the next output data element 55 is received.

If, at 145, all the received output data elements 55 have been processed and all the received input data 10 has been recovered, then at 160 the recovered input data 10 are output (22). The process ends at 165, for example with the sending of an acknowledgement message to the transmitting party 5 of successful receipt of the transmitted output data elements 50 and recovery of the input data 10.

If, at 145, not all of the received output data elements 55 have yet been processed but, at 150, all available key data bytes or key data byte combinations have been used, then, at 170, the currently used key is input to a locally executing copy of the same irreversible complicating algorithm as applied by the transmitting party 5 at 130, to complicate the key and so generate a new key. At 155, the new key is used, beginning with a first available key data byte or combination of key data bytes of the new key, to process the next received output data element 55 and so recover the next received input data byte 10. The process then continues at 140 until, at 145, all the received output data elements 55 have been processed.

Examples of a secured data communications process have been described above in the context of transmitting data over a network 15. However, there are other applications of the process described which may involve a more localised exchange of information. For example, the present process may be beneficial in any application in which a low level of data processing resources are available and data are to be provided with at least a basic level of encryption using a user-defined key, while disguising certain information about the generation of the encryption key and hence of the user.

The schematic block diagrams of Figures 1, 2 and 3 are provided only for the purposes of explaining an example of functionality as may be implemented by the data processing resources of the transmitting and receiving parties 5, 20. The data processing resources used to implement each of the functions represented in the figures may comprise hardware, software, firmware, or a combination thereof. Additionally, some or all of the functionality of the transmitting party 5 or of the receiving party 20 may be performed by a single piece of hardware, software, or firmware.

It will be understood that the data processing resources referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage 30, 35 for storing data. Each example may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A computer-implemented method for encrypting an input (10) to an electronic system to generate a corresponding output (50), the input (10) comprising a plurality of input data elements and the output (50) comprising a respective plurality of output data elements, the method comprising:
(i) generating (75), by applying a predetermined irreversible method (25) to a predetermined data element (30), a key having a plurality of key data elements; and
(ii) applying (115) a predetermined reversible complicating method (40) to each of the plurality of input data elements (10) using a respective one of the plurality of key data elements or a respective combination of two or more of the plurality of key data elements, thereby to generate a respective output data element (50).

2. The computer-implemented method according to claim 1, wherein, at (i), the irreversible method (25) comprises a hashing method to generate (75) a key having a predetermined plurality of key data elements.

3. The computer-implemented method according to claim 1 or claim 2, comprising:
(iii) applying a predetermined irreversible complicating method (130) to generate a new key comprising a corresponding plurality of complicated key data elements, complicated using one or more of the plurality of key data elements, and using the new key at (ii).

4. The computer-implemented method according to claim 3, wherein (iii) comprises generating (130) a new key when the number of said input data elements (10) complicated at (ii) is equal to the number of said key data elements in the key and (ii) comprises complicating subsequently received input data elements (10) using the new key.

5. The computer-implemented method according to any one of claims 1 to 4, wherein (i) comprises, after generating the key:
generating a random number;
complicating the generated random number using one or more of the plurality of key data elements;
combining the generated random number with the generated key; and
including the complicated random number as an output data element (50).

6. The computer-implemented method according to any one of claims 1 to 5, comprising:
(iv) decrypting the plurality of output data elements (50, 55) generated at (ii), by:
(a) generating (85) a key having a plurality of key data elements by applying a predetermined irreversible method (25), the same as that used at (i), to a predetermined data element (35), the same as that (30) used at (i);
(b) for each of the plurality of output data elements (50, 55), using the key generated at (a) to reverse the respective reversible complication applied (115) at (ii) thereby to recover (155) a respective input data element of the plurality of input data elements (10); and
(c) outputting (160) the recovered plurality (22) of input data elements (10).

7. A data communications system, comprising a transmitting party (5) and a receiving party (20) each having a respective data processing arrangement linked to a network (15), wherein the data processing arrangement of the transmitting party (5) is configured:
(i) to generate (75), by applying a predetermined irreversible method (25) to a predetermined data element (30), a key having a plurality of key data elements;
(ii) to receive (100) a plurality of input data elements (10);
(iii) to apply (115) a predetermined reversible complicating method (40) to each of the plurality of input data elements (10) using a respective one of the plurality of key data elements or a respective combination of two or more of the plurality of key data elements, thereby to generate a respective output data element (50); and
(iv) to transmit (120) the generated plurality of output data elements (50) over the network (15) to the receiving party (20), and
the data processing arrangement of the receiving party (20) is configured:
(a) to generate (85) a key having a plurality of key data elements by applying a predetermined irreversible method (25), the same as that used at (i), to a predetermined data element (35), the same as that (30) used at (i);
(b) to receive (140) a plurality of output data elements (55) from the network (15);
(c) for each of the plurality of output data elements (55) received over the network (15), to use the key generated at (a) to reverse (155) the respective reversible complication applied (115) at (iii) thereby to recover (155) a respective input data element of the plurality of input data elements (10); and
(d) to output (160) the recovered plurality of input data elements (10).

8. The data communications system according to claim 7, wherein:
the data processing arrangement of the transmitting party (5) is configured, at (iii), after applying (115) the reversible complicating method (40) to each of a predetermined number of the plurality of input data elements (10), to apply (130) a predetermined irreversible complicating method to key data elements of the key to generate a new key, and to use the new key when applying (115) the reversible complicating method (40) to subsequently received input data elements (10); and
the data processing arrangement of the receiving party (20) is configured, at (c), after recovering (155) the predetermined number of the plurality of input data elements (10) at (iii) from said output data elements (55) received (140) over the network (15), to apply (170) a predetermined irreversible complicating method, the same as used at (iii), to key data elements of the key to generate a new key, and to use the new key when recovering (155) said input data elements (10) from said output data elements (55) received subsequently.

9. The data communications system according to claim 8, wherein the predetermined number of the plurality of input data elements (10) at (iii) and (c) is equal to the number of said key data elements in the key.

10. The data communications system according to any one of claims 7 to 9, wherein:
the data processing arrangement of the transmitting party (5) is configured, at (i), after generating (75) the key:
to generate a random number;
to complicate the generated random number using one or more of the plurality of key data elements;
to combine the generated random number with the generated key; and
to include the complicated random number as an output data element (50), and
the data processing arrangement of the receiving party (20) is configured, at (a), after generating (85) the key:
to receive (140) an output data element (55) over the network including the random number generated at (i);
to reverse the complication of the generated random number applied at (i) using the same one or more of the plurality of key data elements generated at (a) as used at (i); and
to combine the generated random number with the key generated (85) at (a).

11. A computer program which when installed and executed by a data processing arrangement in an electronic system, causes the data processing arrangement to implement the computer-implemented method according to any one of claims 1 to 6.

12. A computer program, comprising a first component which when installed and executed by a data processing arrangement of a transmitting party (5) in a communications system, causes the data processing arrangement of the transmitting party (5):
(i) to generate (75), by applying a predetermined irreversible method (25) to a predetermined data element (30), a key having a plurality of key data elements;
(ii) to receive (100) a plurality of input data elements (10);
(iii) to apply (115) a predetermined reversible complicating method (40) to each of the plurality of input data elements (10) using a respective one of the plurality of key data elements or a respective combination of two or more of the plurality of key data elements, thereby to generate a respective output data element (50); and
(iv) to transmit (120) the generated plurality of output data elements (50) over the network (15) to the receiving party (20), and
a second component which when installed and executed by a data processing arrangement of a receiving party (20) in the communications system, causes the data processing arrangement of the receiving party (20):
(a) to generate (85) a key having a plurality of key data elements by applying a predetermined irreversible method (25), the same as that used at (i), to a predetermined data element (35), the same as that (30) used at (i);
(b) to receive (140) a plurality of output data elements (55) from the network (15);
(c) for each of the plurality of output data elements (55) received from the network (15), to use the key generated (85) at (a) to reverse (155) the respective reversible complication applied (115) at (iii) thereby to recover a respective input data element of the plurality of input data elements (10); and
(d) to output (160) the recovered plurality (22) of input data elements (10).

13. The computer program according to claim 12, wherein the first component causes the data processing arrangement of the transmitting party (5):
at (iii), after applying (115) the reversible complicating method (40) to each of a predetermined number of the plurality of input data elements (10), to apply (130) a predetermined irreversible complicating method to key data elements of the key to generate a new key, and to use the new key when applying (115) the reversible complicating method to subsequently received input data elements (10), and
the second component causes the data processing arrangement of the receiving party (20):
at (c), after recovering (155) the predetermined number of the plurality of input data elements (10) at (iii) from said output data elements (55) received over the network (15), to apply (170) a predetermined irreversible complicating method, the same as used (130) at (iii), to key data elements of the key to generate a new key, and to use the new key when recovering said input data elements from said output data elements (55) received (140) subsequently.

14. The computer program according to claim 13, wherein the predetermined number of the plurality of input data elements (10) at (iii) and (c) is equal to the number of said key data elements in the key.

15. The computer program according to any one of claims 12 to 14, wherein the first component causes the data processing arrangement of the transmitting party (5), at (i), after generating the key:
to generate a random number;
to complicate the generated random number using one or more of the plurality of key data elements;
to combine the generated random number with the generated key; and
to include the complicated random number as an output data element (50), and the second component causes the data processing arrangement of the receiving party (20), at (a), after generating the key:
to receive (140) an output data element (55) over the network (15) including the random number generated at (i);
to reverse the complication of the generated random number applied at (i) using the same one or more of the plurality of key data elements generated at (a) as used at (i); and
to combine the generated random number with the key generated at (a).
